(19) Europäisches Patentamt
European Patent Office
Office européen des brevets

(11) **EP 4 783 491 A2**

(12) **EUROPEAN PATENT APPLICATION**

(43) Date of publication:
**29.07.2026 Bulletin 2026/31**

(21) Application number: **26151302.2**

(22) Date of filing: **12.01.2026**

(51) International Patent Classification (IPC):
**H04J 3/06** (2006.01)

(52) Cooperative Patent Classification (CPC):
**H04J 3/0667**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.01.2025 US 202519036436**

(71) Applicant: **Nokia Solutions and Networks Oy 02610 Espoo (FI)**

(72) Inventors:
• **GOWTHAMAN, Vinoth Kanata (CA)**
• **ROBERTS, Peter Ottawa (CA)**
• **DONTHI, Shiva Sri Krishna Stittsville (CA)**

(74) Representative: **Zinsinger, Norbert Louis Pöhlau Lohrentz Patentanwälte Partnerschaft mbB P.O.Box 30 55 90014 Nürnberg (DE)**

(54) **SYNCHRONIZING TIME OVER LAG LINKS BY SUSPENDING LAG PROCESSING**

(57) In certain embodiments involving a Precision Time Protocol (PTP) time transmitter connected to a PTP time receiver over a link aggregation group (LAG), the receiver suspends normal LAG processing during PTP clock-sync operations to ensure that a PTP Delay-Request message is transmitted to the transmitter over the same LAG link used by the transmitter to transmit the corresponding PTP Sync message to the receiver in order to avoid errors resulting from different LAG links having different average transmission delays.

FIG. 1   100

**Description**

BACKGROUND

Field of the Disclosure

The present disclosure relates to distributed computer networks and, more specifically, to synchronizing time between nodes in a distributed computer network.

Description of the Related Art

This section introduces aspects that may help facilitate a better understanding of the disclosure. Accordingly, the statements of this section are to be read in this light and are not to be understood as admissions about what is prior art or what is not prior art.

In a Precision Time Protocol (PTP) system conforming to the IEEE Std 1588™-2008 (or its revised version of IEEE1588-2019) standard, the teachings of which are incorporated herein by reference, a PTP time transmitter functions as a time reference for one or more PTP time receivers, where the PTP time transmitter maintains a PTP reference clock and each PTP time receiver maintains its own local clock that it disciplines to match the time at the PTP time transmitter.

In order to compensate for offsets that will invariably occur between the time at the PTP time transmitter and the time at the PTP time receivers, each PTP time receiver will periodically initiate clock-synchronization operations with its PTP time transmitter to synchronize its local clock with the PTP reference clock at the PTP time transmitter. In order for a PTP time receiver to synchronize its local clock with the PTP reference clock at the PTP time transmitter, the PTP time receiver calculates an offset value used to adjust its local clock to be in sync with the PTP reference clock.

In order to determine the offset value for a PTP time receiver, it is known for the PTP time transmitter and the PTP time receiver to perform the following clock-synchronization (aka clock-sync) operation:

- The PTP time transmitter transmits a PTP Sync message to the PTP time receiver;

- The PTP time transmitter records the PTP reference time (T1) of transmission of the PTP Sync message;

- The PTP time receiver records the local time (T2) of receipt of the PTP Sync message;

- The PTP time receiver transmits a PTP Delay-Request message to the PTP time transmitter;

- The PTP time receiver records the local time (T3) of transmission of the PTP Delay-Request message;

- The PTP time transmitter records the PTP reference time (T4) of receipt of the PTP Delay-Request message;

- The PTP time transmitter conveys, to the PTP time receiver, the PTP reference time (T1) of transmission of the PTP Sync message and the PTP reference time (T4) of receipt of the PTP Delay-Request message;

- The PTP time receiver uses the four time values T1 through T4 to calculate the offset between its local clock and the PTP reference clock; and

- The PTP time receiver uses the calculated offset to adjust its local clock to be synchronized with the PTP reference clock.

Those skilled in the art will understand that, depending on the implementation, the PTP time transmitter can convey time T1 to the PTP time receiver in the PTP Sync message or in a subsequent PTP Follow-up message. Furthermore, the PTP time transmitter conveys time T4 to the PTP time receiver through a PTP Delay-Response message.

In some systems, a PTP time transmitter and a PTP time receiver are connected by a link aggregation group (LAG) comprising multiple, different, point-to-point, physical links between multiple, different ports at the PTP time transmitter and respective ports at the PTP time receiver. According to conventional LAG technology, LAG processing at each node (i.e., the PTP time transmitter or receiver) independently determines which port / link to transmit each different message to the other node. As a result of this conventional, independent LAG processing, when implementing the clock-sync operation, one link may be used to transmit the PTP Sync message from the PTP time transmitter to the PTP time receiver and a different link may be used to transmit the corresponding PTP Delay-Request message from the PTP time receiver to the PTP time transmitter. In that case, if the delays (i.e., the time that it takes for a message to travel between the **PTP** time transmitter and the **PTP** time receiver) for those two links are significantly different, then this is part of the total error at the **PTP** time receiver's calculation to synchronize its local clock with the **PTP** reference clock.

SUMMARY

Problems in the prior art are addressed in accordance with the principles of the present disclosure by a technique that suspends normal LAG processing during a **PTP** clock-sync operation to ensure that the same link is used for both the **PTP** Sync message and the **PTP** Delay-Request message to avoid errors resulting from different links having different average transmission delays.

Example embodiments disclose a method for a time receiver having a local clock and connected to a time transmitter via a link aggregation group (LAG) comprising a plurality of LAG links between the time transmitter and the time receiver, the time transmitter having a reference clock, the method comprising the time receiver: receiving a sync message from the time transmitter over one of the LAG links; suspending normal LAG processing to ensure that a delay-request message is transmitted to the time transmitter over the one LAG link on which the sync message was received; generating an offset value based on the sync message and the delay-request message; and synchronizing the local clock to the reference clock based on the offset value. In example embodiments, the time receiver is a Precision Time Protocol (PTP) time receiver; and the sync and delay-request messages are **PTP** messages. **In** example embodiments, generating the offset value comprises: generating a mean path delay for the one LAG link based on the sync message and the delay-request message; and generating the offset value based on the mean path delay and a subsequent sync message. **In** example embodiments, the method is performed for each of one or more others of the LAG links.

Example embodiments disclose a time receiver having a local clock and connected to a time transmitter via a link aggregation group (LAG) comprising a plurality of LAG links between the time transmitter and the time receiver, the time transmitter having a reference clock, the time receiver comprising; at least one processor; and at least one memory storing instructions that, upon being executed by the at least one processor, cause the time receiver at least to: receive a sync message from the time transmitter over one of the LAG links; suspend normal LAG processing to ensure that a delay-request message is transmitted to the time transmitter over the one LAG link on which the sync message was received; generate an offset value based on the sync message and the delay-request message; and synchronize the local clock to the reference clock based on the offset value. In example embodiments, the time receiver is a Precision Time Protocol (PTP) time receiver; and the sync and delay-request messages are PTP messages. In example embodiments, the time receiver is configured to generate the offset value by: generating a mean path delay for the one LAG link based on the sync message and the delay-request message; and generating the offset value based on the mean path delay and a subsequent sync message. In example embodiments, the time receiver is configured to perform analogous processing for each of one or more others of the LAG links.

BRIEF DESCRIPTION OF THE DRAWINGS

Embodiments of the disclosure will become more fully apparent from the following detailed description, the appended claims, and the accompanying drawings in which like reference numerals identify similar or identical elements.

FIG. 1 is a block diagram of a PTP system comprising a PTP time transmitter connected to a PTP time receiver by a link aggregation group;

FIG. 2 is a diagram representing the flow of messages during a clock-sync operation between the PTP time transmitter and the PTP time receiver for a link in the link aggregation group; and

FIG. 3 is a simplified hardware block diagram of an example node that can be used to implement the PTP time transmitter and the PTP time receiver of FIGs. 1 and 2.

DETAILED DESCRIPTION

Detailed illustrative embodiments of the present disclosure are disclosed herein. However, specific structural and functional details disclosed herein are merely representative for purposes of describing example embodiments of the present disclosure. The present disclosure may be embodied in many alternate forms and should not be construed as limited to only the embodiments set forth herein. Further, the terminology used herein is for the purpose of describing particular embodiments only and is not intended to be limiting of example embodiments of the disclosure.

As used herein, the singular forms "a," "an," and "the," are intended to include the plural forms as well, unless the context clearly indicates otherwise. It further will be understood that the terms "comprises," "comprising," "contains," "containing," "includes," and/or "including," specify the presence of stated features, steps, or components, but do not preclude the presence or addition of one or more other features, steps, or components. It also should be noted that in some alternative implementations, the functions/acts noted may occur out of the order noted in the figures. For example, two figures shown in succession may in fact be executed substantially concurrently or may sometimes be executed in the reverse order, depending upon the functions/acts involved.

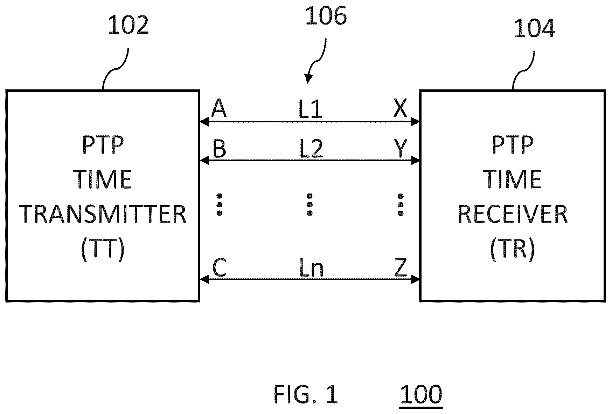

FIG. 1 is a block diagram of a PTP system 100 comprising a PTP time transmitter (TT) 102 connected to a PTP time receiver (TR) 104 by a link aggregation group (LAG) 106 consisting of links L1-Ln, where n is an integer greater than 1, link L1 connects port A of the PTP TT 102 with port X of the PTP TR 104, link L2 connects port B of the PTP TT 102 with port Y of the PTP TR 104, and so on down to link Ln, which connects port C of the PTP TT 102 with port Z of the PTP TR 104. Those skilled in the art will understand that the PTP TT 102 may be connected to any suitable number of other PTP time receivers via other link aggregation groups that are analogous to the LAG 106 and the PTP TR 104 of FIG. 1. Those skilled in the art will also understand that there may be one or more intermediate nodes along each link Li between the PTP TT 102 and the PTP TR 104.

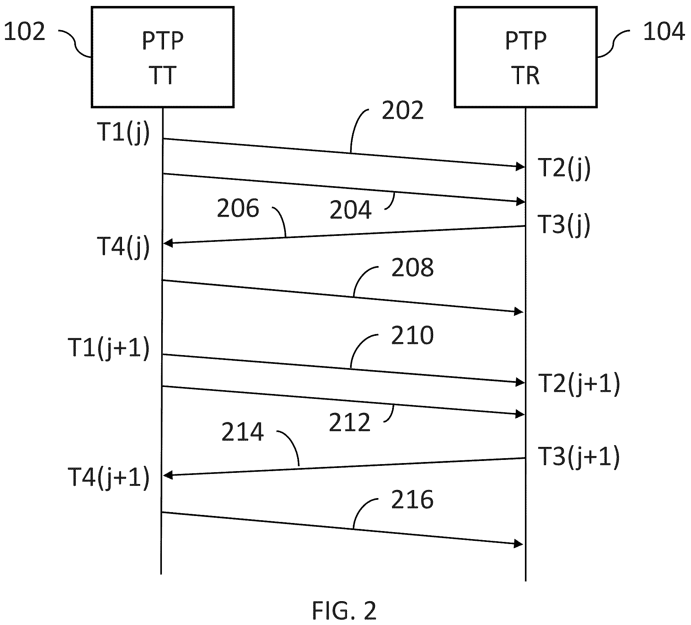

FIG. 2 is a diagram representing the following flow of messages during clock-sync operations between the PTP TT 102 and the PTP TR 104 for link Li:

- The PTP TT 102 transmits a $j^{th}$ PTP Sync message 202 to the PTP TR 104 over link Li;

- The PTP TT 102 records the PTP reference time (T1(j)) of transmission of the $j^{th}$ PTP Sync message 202;

- The PTP TR 104 records the local time (T2(j)) of receipt of the $j^{th}$ PTP Sync message 202;

- The PTP TT 102 conveys the $j^{th}$ PTP reference time (T1(j)) in a $j^{th}$ PTP Follow-up message 204 to the PTP TR 104 over link Li if the PTP TT 102 port is two-step. If the PTP TT 102 port is one-step, then the $j^{th}$ PTP reference time (T1(j)) is conveyed in the $j^{th}$ PTP Sync message 202 and the $j^{th}$ PTP Follow-up message 204 may be omitted. Note that since the $j^{th}$ Follow-up message 204 identifies the corresponding $j^{th}$ Sync message 202, the PTP TR 104 would know that the $j^{th}$ Sync message 202 was previously received on link Li. As such, in theory, the $j^{th}$ Follow-up message 204 may be transmitted over any link in the LAG 106;

- The PTP TR 104 suspends normal LAG processing to ensure that a $j^{th}$ PTP Delay-Request message 206 is transmitted to the PTP TT 102 over the same link Li;

- The PTP TR 104 records the local time (T3(j)) of transmission of the $j^{th}$ PTP Delay-Request message 206;

- The PTP TT 102 records the PTP reference time (T4(j)) of receipt of the $j^{th}$ PTP Delay-Request message 206;

- The PTP TT 102 conveys, to the PTP TR 104, the PTP reference time (T4(j)) of receipt of the $j^{th}$ PTP Delay-Request message 206 over link Li in a $j^{th}$ Delay-Response message 208. Note that, as long as the $j^{th}$ Delay-Response message 208 identifies link Li, in theory, the $j^{th}$ Delay-Response message 208 may be transmitted over any link in the LAG 106;

- The PTP TR 104 uses the four time values T1(j) through T4(j) to calculate the $j^{th}$ mean path delay (MPD(j)) between the PTP reference clock at the PTP TT 102 and the local clock at the PTP TR 104 as follows:

$$MPD(j) = (((T2(j)\text{-}T1(j)) + (T4(j)\text{-}T3(j))) / 2)$$

- The PTP TT 102 transmits a $(j+1)^{th}$ PTP Sync message 210 to the PTP TR 104 over link Li;

- The PTP TT 102 records the PTP reference time (T1(j+1)) of transmission of the $(j+1)^{th}$ PTP Sync message 210;

- The PTP TR 104 records the local time (T2(j+1)) of receipt of the $(j+1)^{th}$ PTP Sync message 210;

- The PTP TT 102 conveys the $(j+1)^{th}$ PTP reference time (T1(j+1)) in a $(j+1)^{th}$ PTP Follow-up message 212 to the PTP TR 104 over link Li if the PTP TT 102 port is two-step. If the PTP TT 102 port is one-step, then the $(j+1)^{th}$ PTP reference time (T1(j+1)) is conveyed in the $(j+1)^{th}$ PTP Sync message 210 and the $(j+1)^{th}$ PTP Follow-up message 212 may be omitted. Note that, as long as the $(j+1)^{th}$ Follow-up message 212 identifies link Li, in theory, the $(j+1)^{th}$ Follow-up message 212 may be transmitted over any link in the LAG 106;

- The PTP TR 104 suspends normal LAG processing to ensure that a $(j+1)^{th}$ PTP Delay-Request message 214 is transmitted to the PTP TT 102 over the same link Li;

- The PTP TR 104 records the local time $(T3(j+1))$ of transmission of the $(j+1)^{th}$ PTP Delay-Request message 214;

- The PTP TT 102 records the PTP reference time $(T4(j+1))$ of receipt of the $(j+1)^{th}$ PTP Delay-Request message 214;

- The PTP TT 102 conveys, to the PTP TR 104, the PTP reference time $(T4(j+1))$ of receipt of the $(j+1)^{th}$ PTP Delay-Request message 214 over link Li in a $(j+1)^{th}$ Delay-Response message 216. Note that, as long as the $(j+1)^{th}$ Delay-Response message 216 identifies link Li, in theory, the $(j+1)^{th}$ Delay-Response message 216 may be transmitted over any link in the LAG 106;

- The PTP TR 104 uses the two time values $T1(j+1)$ and $T2(j+1)$ and the $j^{th}$ mean path delay MPD(j) to calculate the $(j+1)^{th}$ offset OFFSET(j+1) as follows:

$$OFFSET(j+1) = (T2(j+1) - (T1(j+1) - MPD(j)$$

- The PTP TR 104 uses the calculated $(j+1)^{th}$ offset OFFSET(j+1) to adjust its local clock to be in sync with the PTP reference clock; and

- The PTP TR 104 uses the four time values $T1(j+1)$ through $T4(j+1)$ to calculate the $(j+1)^{th}$ mean path delay $(MPD(j=1))$ between the PTP reference clock at the PTP TT 102 and the local clock at the PTP TR 104 as follows:

$$MPD(j+1) = (((T2(j+1)-T1(j+1)) + (T4(j+1)-T3(j+1))) / 2).$$

The transmission of subsequent sync, delay request, and delay response messages and the associated processing at the PTP TR 104 can continue to be repeated with the mean path delay continually being updated and used to calculate and use subsequent offsets to synchronize the PTP TR's local clock with the PTP TT's reference clock.

Note that, if the delay request message 214 is transmitted over a link other than link Li, the $(j+1)^{th}$ mean path delay will not be able to be calculated, but the $(j+1)^{th}$ offset can still be calculated using the $(j+1)^{th}$ times $T1(j+1)$ and $T2(j+1)$ and the $j^{th}$ mean path delay MPD(j). As such, according to certain implementations, a delay-request message does not need to be transmitted and the mean path delay does not need to be calculated for every sync message that gets transmitted. Instead, the mean path delay can be updated relatively infrequently (by suspending normal LAG processing when transmitting a corresponding delay request message), while the PTP TR's local clock can be more frequently synchronized with every sync message using the most-recent, calculated mean path delay (without having to transmit corresponding delay request messages).

As described, FIG. 2 shows the flow of messages during clock-sync operations between the PTP TT 102 and the PTP TR 104 for a specific link Li in the LAG 106 of FIG. 1. Similar message flow and corresponding calculations can be performed over time for one or more or even all of the links in the LAG 106 of FIG. 1 to calculate and update a mean path delay for each of those links to enable clock synchronization whenever a sync message is transmitted over one of those links.

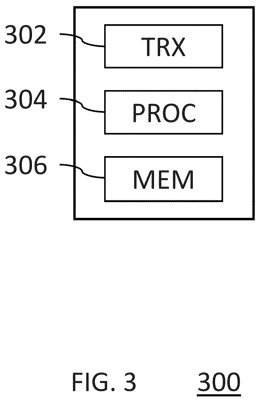

FIG. 3 is a simplified hardware block diagram of an example node 300 that can be used to implement the PTP TT 102 and the PTP TR 104 of FIGs. 1 and 2. As shown in FIG. 3, the node 300 includes (i) communication hardware (e.g., wireless, wireline, and/or optical transceivers (TRX)) 302 that supports communications with other nodes, (ii) one or more processors (e.g., CPU and/or GPU microprocessors) 304 that control the operations of the node 300 and/or process data within the node 300, and (iii) one or more memories (e.g., RAM, ROM) 306 that store code executed by the processors 304 and/or data generated and/or received by the node 300.

Although the disclosure has been described in the context of PTP systems that conform to the IEEE Std 1588™-2008 and IEEE Std 1588™-2019 standards and having a link aggregation group (LAG) between a PTP time transmitter and a PTP time receiver, those skilled in the art will understand that the present disclosure can be implemented in any suitable context to synchronize a local clock at a time receiver with a reference clock at a time transmitter, where there are multiple, possible (wired, wireless, or optical) paths between the receiver and the transmitter.

In certain embodiments, the present disclosure is a method for a time receiver having a local clock and connected to a time transmitter via a link aggregation group (LAG) comprising a plurality of LAG links between the time transmitter and the time receiver, the time transmitter having a reference clock. The method comprises the time receiver receiving a sync message from the time transmitter over one of the LAG links; suspending normal LAG processing to ensure that a delay-request message is transmitted to the time transmitter over the one LAG link on which the sync message was received;

generating an offset value based on the sync message and the delay-request message; and synchronizing the local clock to the reference clock based on the offset value.

In at least some of the above embodiments, the time receiver is a Precision Time Protocol (PTP) time receiver; and the sync and delay-request messages are PTP messages.

In at least some of the above embodiments, generating the offset value comprises (i) generating a mean path delay for the one LAG link based on the sync message and the delay-request message and (ii) generating the offset value based on the mean path delay and a subsequent sync message.

In at least some of the above embodiments, the method is performed for each of one or more others of the LAG links.

Unless explicitly stated otherwise, each numerical value and range should be interpreted as being approximate as if the word "about" or "approximately" preceded the value or range.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence. Likewise, additional steps may be included in such methods, and certain steps may be omitted or combined, in methods consistent with various embodiments of the disclosure.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Also, for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements. The same type of distinction applies to the use of terms "attached" and "directly attached," as applied to a description of a physical structure.

As used herein in reference to an element and a standard, the terms "compatible" and "conform" mean that the element communicates with other elements in a manner wholly or partially specified by the standard and would be recognized by other elements as sufficiently capable of communicating with the other elements in the manner specified by the standard. A compatible or conforming element does not need to operate internally in a manner specified by the standard.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

The functions of the various elements shown in the figures, including any functional blocks labeled as "processors" and/or "controllers," may be provided through the use of dedicated hardware as well as hardware capable of executing software in association with appropriate software. Upon being provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

As will be appreciated by one of ordinary skill in the art, the present disclosure may be embodied as an apparatus (including, for example, a system, a network, a machine, a device, a computer program product, and/or the like), as a method (including, for example, a business process, a computer-implemented process, and/or the like), or as any combination of the foregoing. Accordingly, embodiments of the present disclosure may take the form of an entirely software-based embodiment (including firmware, resident software, micro-code, and the like), an entirely hardware embodiment, or an embodiment combining software and hardware aspects that may generally be referred to herein as a "system" or "network".

Embodiments of the disclosure can be manifest in the form of methods and apparatuses for practicing those methods. Embodiments of the disclosure can also be manifest in the form of program code embodied in tangible media, such as magnetic recording media, optical recording media, solid state memory, floppy diskettes, CD-ROMs, hard drives, or any other non-transitory machine-readable storage medium, wherein, upon the program code being loaded into and executed by a machine, such as a computer, the machine becomes an apparatus for practicing the disclosure. Embodiments of the disclosure can also be manifest in the form of program code, for example, stored in a non-transitory machine-readable storage medium including being loaded into and/or executed by a machine, wherein, upon the program code being loaded into and executed by a machine, such as a computer, the machine becomes an apparatus for practicing the disclosure. Upon being implemented on a general-purpose processor, the program code segments combine with the processor to provide a unique device that operates analogously to specific logic circuits. The term "non-transitory," as used herein, is a limitation of the medium itself (i.e., tangible, not a signal) as opposed to a limitation on data storage persistency (e.g., RAM vs. ROM).

Signals and corresponding terminals, nodes, ports, links, interfaces, or paths may be referred to by the same name and/or label and are interchangeable for purposes here.

In this specification including any claims, the term "each" may be used to refer to one or more specified characteristics of a plurality of previously recited elements or steps. When used with the open-ended term "comprising," the recitation of the term "each" does not exclude additional, unrecited elements or steps. Thus, it will be understood that an apparatus may have additional, unrecited elements and a method may have additional, unrecited steps, where the additional, unrecited elements or steps do not have the one or more specified characteristics.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. For example, the phrases "at least one of A and B" and "at least one of A or B" are both to be interpreted to have the same meaning, encompassing the following three possibilities: 1- only A; 2- only B; 3- both A and B.

All documents mentioned herein are hereby incorporated by reference in their entirety or alternatively to provide the disclosure for which they were specifically relied upon.

The embodiments covered by the claims in this application are limited to embodiments that (1) are enabled by this specification and (2) correspond to statutory subject matter. Non-enabled embodiments and embodiments that correspond to non-statutory subject matter are explicitly disclaimed even if they fall within the scope of the claims.

As used herein and in the claims, the term "provide" with respect to an apparatus or with respect to a system, device, or component encompasses designing or fabricating the apparatus, system, device, or component; causing the apparatus, system, device, or component to be designed or fabricated; and/or obtaining the apparatus, system, device, or component by purchase, lease, rental, or other contractual arrangement.

While preferred embodiments of the disclosure have been shown and described herein, it will be obvious to those skilled in the art that such embodiments are provided by way of example only. Numerous variations, changes, and substitutions will now occur to those skilled in the art without departing from the disclosure. It should be understood that various alternatives to the embodiments of the disclosure described herein may be employed in practicing the technology of the disclosure. It is intended that the following claims define the scope of the invention and that methods and structures within the scope of these claims and their equivalents be covered thereby.

## Claims

1. A method for a time receiver having a local clock and connected to a time transmitter via a link aggregation group (LAG) comprising a plurality of LAG links between the time transmitter and the time receiver, the time transmitter having a reference clock, the method comprising the time receiver:

    receiving a sync message from the time transmitter over one of the LAG links;
    suspending normal LAG processing to ensure that a delay-request message is transmitted to the time transmitter over the one LAG link on which the sync message was received;

generating an offset value based on the sync message and the delay-request message; and
synchronizing the local clock to the reference clock based on the offset value.

2. The method of claim 1, wherein:

the time receiver is a Precision Time Protocol (PTP) time receiver; and
the sync and delay-request messages are PTP messages.

3. The method of claim 1 or 2, wherein generating the offset value comprises:

generating a mean path delay for the one LAG link based on the sync message and the delay-request message; and
generating the offset value based on the mean path delay and a subsequent sync message.

4. The method of claim 1, 2 or 3, wherein the method is performed for each of one or more others of the LAG links.

5. A time receiver having a local clock and connected to a time transmitter via a link aggregation group (LAG) comprising a plurality of LAG links between the time transmitter and the time receiver, the time transmitter having a reference clock, the time receiver comprising;

at least one processor; and
at least one memory storing instructions that, upon being executed by the at least one processor, cause the time receiver at least to:

receive a sync message from the time transmitter over one of the LAG links;
suspend normal LAG processing to ensure that a delay-request message is transmitted to the time transmitter over the one LAG link on which the sync message was received;
generate an offset value based on the sync message and the delay-request message; and
synchronize the local clock to the reference clock based on the offset value.

6. The time receiver of claim 5, wherein:

the time receiver is a Precision Time Protocol (PTP) time receiver; and
the sync and delay-request messages are PTP messages.

7. The time receiver of claim 5 or 6, wherein the time receiver is configured to generate the offset value by:

generating a mean path delay for the one LAG link based on the sync message and the delay-request message; and
generating the offset value based on the mean path delay and a subsequent sync message.

8. The time receiver of claim 5, 6 or 7, wherein the time receiver is configured to perform analogous processing for each of one or more others of the LAG links.

FIG. 1          100

FIG. 2

TRX

PROC

MEM

302

304

306

FIG. 3    300